# EUROPÄISCHE PATENTANMELDUNG

(11) **EP 1 767 719 A2**
(43) Veröffentlichungstag der Anmeldung: **28.03.2007**
(21) Anmeldenummer: 06120772.6
(22) Anmeldetag: 15.09.2006
(51) Int. Cl.: E04D 13/18, H01L 31/042, F24J 2/52

(54) **Befestigungsvorrichtung für die Befestigung von Solarpaneelen an einer C-förmigen Montageschiene**

(30) Priorität: 23.09.2005 DE 102005000130
(71) Anmelder: HILTI Aktiengesellschaft, 9494 Schaan (LI)
(72) Erfinder: Rubio, Daniel, 28007 Madrid (ES); Hoffmann, Armin, 86899 Landsberg (DE); Herb, Armin, 86974 Apfeldorf (DE)
(74) Vertreter: Wildi, Roland

(57) **Zusammenfassung**

Eine Befestigungsvorrichtung (11) für die Befestigung von Solarpaneelen (1) an einer C-förmigen Montageschiene, die eine von Rändern begrenzte Montageöffnung aufweist, umfasst ein Niederhalteelement (12), das einen ersten Abschnitt (13) mit einer Durchführöffnung, einen Niederhalteabschnitt (15) zum Niederhalten der Solarpaneele (1) sowie einen den ersten Abschnitt (13) und den Niederhalteabschnitt (15) verbindenden Verbindungsabschnitt (16) aufweist, wobei der Niederhalteabschnitt (15) senkrecht zu dem Verbindungsabschnitt (16) angeordnet ist. Weiter umfasst die Befestigungsvorrichtung (11) ein ein Innengewinde (23) aufweisendes Hintergreifteil (21) zum Einführen in die Montageöffnung und zum Hintergreifen der freien Ränder der Montageöffnung der Montageschiene sowie eine Befestigungsschraube (31) zum Verspannen der Befestigungsvorrichtung (11) an der Montageschiene durch deren Längserstreckung eine Längsachse (34) der Befestigungsvorrichtung (11) verläuft. Das Hintergreifteil (21) weist einen ersten Schenkel (22) mit dem Innengewinde (23) und einen, in einem Winkel zu dem ersten Schenkel (22) ausgerichteten zweiten Schenkel (24) auf. Der erste Schenkel (22) weist zumindest bereichsweise eine Breite (S) auf, die grösser als die Breite der Montageöffnung der Montageschiene ist. Zwischen dem Bereich des ersten Schenkels (22), der die Breite (S) aufweist, und dem zweiten Schenkel (24) weist der erste Schenkel (22) eine Breite (U) auf, die höchstens der Breite der Montageöffnung entspricht. Die Breite (T) des zweiten Schenkels (24) entspricht höchstens der Breite der Montageöffnung. An dem, von dem ersten Schenkel (22) abgewandten freien Endbereich (26) des zweiten Schenkels (24) sind beidseitig seitlich abragende Vorsprünge (27) vorgesehen, wobei der Abstand (V) von einem Vorsprung (27) zum anderen Vorsprung (27) grösser als die Breite der Montageöffnung ist. Der Verbindungsabschnitt (16) des Niederhalteelementes (12) ist in einem Winkel (B) zu der Längsachse (34) der Befestigungsvorrichtung (11) angeordnet.

## Beschreibung

### Technisches Gebiet

Die Erfindung betrifft eine Befestigungsvorrichtung für die Befestigung von Solarpaneelen an einer C-förmigen Montageschiene, der im Oberbegriff des Patentanspruchs 1 genannten Art.

### Stand der Technik

Um Solaranlagen im Freiland oder auf Flachdächern in einer geneigten Ausrichtung von beispielsweise 30° zu installieren, werden immer öfter C-förmige Montageschienen als Unterkonstruktionen verwendet, wie sie aus dem Bereich der Rohrleitungsinstallationen bekannt sind. Die C-förmigen Montageschienen weisen jeweils über deren gesamte Länge eine von Rändern begrenzte Montageöffnung auf. Mittels einzelner Befestigungsvorrichtungen werden die auf die Montageschienen aufliegenden Solarpaneele gegen Wind- und Schneelasten fixiert.

Aus der DE 296 16 947 U1 ist ein Befestigungssystem mit einer Befestigungsvorrichtung für die Befestigung von Solarpaneelen an einer Montageschiene bekannt, die als eine von Rändern begrenzte Montageöffnung eine längs verlaufende Nut aufweist. Die Befestigungsvorrichtung umfasst ein Niederhalteelement, das einen ersten Abschnitt mit einer Durchführöffnung, einen Niederhalteabschnitt zum Niederhalten der Solarpaneele sowie einen den ersten Abschnitt und den Niederhalteabschnitt verbindenden Verbindungsabschnitt aufweist, wobei der Niederhalteabschnitt senkrecht zu dem Verbindungsabschnitt angeordnet ist. Weiter umfasst die Befestigungsvorrichtung als Hintergreifteil ein Mutterteil mit einem Innengewinde sowie eine Befestigungsschraube mit einem Schraubenkopf und einem davon abragenden Schraubenschaft, welche die Durchführöffnung im ersten Abschnitt des Niederhalteelementes durchdringt und zum Verspannen der Befestigungsvorrichtung an der Montageschiene in das Innengewinde im Mutterteil eingreift. Durch die Längserstreckung der Befestigungsschraube verläuft eine Längsachse der Befestigungsvorrichtung.

Nachteilig an der bekannten Lösung ist, dass mit dieser Befestigungsvorrichtung beim Verspannen derselben an einer C-förmigen Montageschiene das Niederhalteelement vom Rand des Solarpaneels abrutschen kann und somit die Montage für die Randfixierung der Solarpaneele aufwändig ist.

### Darstellung der Erfindung

Aufgabe der Erfindung ist es, eine vormontierte Befestigungsvorrichtung insbesondere für die seitliche Fixierung der Solarpaneele an einer C-förmigen Montageschiene zuschaffen, die für eine Vielzahl von Solarpaneeltypen geeignet und einfach montierbar ist.

Die Aufgabe ist durch die Merkmale des unabhängigen Anspruchs gelöst. Vorteilhafte Weiterbildungen sind in den Unteransprüchen dargelegt.

Gemäss der Erfindung umfasst eine Befestigungsvorrichtung für die Befestigung von Solarpaneelen an einer C-förmigen Montageschiene, die eine von Rändern begrenzte Montageöffnung aufweist, ein Niederhalteelement, das einen ersten Abschnitt mit einer Durchführöffnung, einen Niederhalteabschnitt zum Niederhalten der Solarpaneele sowie einen den ersten Abschnitt und den Niederhalteabschnitt verbindenden Verbindungsabschnitt aufweist, wobei der Niederhalteabschnitt senkrecht zu dem Verbindungsabschnitt angeordnet ist, ein ein Innengewinde aufweisendes Hintergreifteil zum Einführen in die Montageöffnung und zum Hintergreifen der freien Ränder der Montageöffnung der Montageschiene, sowie eine Befestigungsschraube mit einem Schraubenkopf und einem davon abragenden Schraubenschaft, welche die Durchführöffnung im ersten Abschnitt des Niederhalteelementes durchdringt und zum Verspannen der Befestigungsvorrichtung an der Montageschiene in das Innengewinde im Hintergreifteil eingreift. Durch die Längserstreckung der Befestigungsschraube verläuft eine Längsachse der Befestigungsvorrichtung. Das Hintergreifteil weist einen ersten Schenkel mit dem Innengewinde und einen, in einem Winkel zu dem ersten Schenkel ausgerichteten zweiten Schenkel auf. Der erste Schenkel weist zumindest bereichsweise eine Breite auf, die grösser als die Breite der Montageöffnung der Montageschiene ist. Die Breite des zweiten Schenkels entspricht höchstens der Breite der Montageöffnung. An dem, von dem ersten Schenkel abgewandten freien Endbereich des zweiten Schenkels sind beidseitig seitlich abragende Vorsprünge vorgesehen, wobei der Abstand von einem Vorsprung zum anderen Vorsprung grösser als die Breite der Montageöffnung ist. Der Verbindungsabschnitt des Niederhalteelementes ist in einem Winkel zu der Längsachse der Befestigungsvorrichtung angeordnet.

Die erfindungsgemässe Befestigungsvorrichtung wird in die C-förmige Montageschiene beispielsweise von der Seite eingeführt und bis an das Solarpaneel geschoben. Beim Verspannen der Befestigungsvorrichtung mittels der Befestigungsschraube kommt der Niederhalteabschnitt des Niederhalteelementes mit der Oberseite des Solarpaneelrandes in Anlage. Beim weiteren Verspannvorgang dreht das Hintergreifteil um die Angriffspunkte des ersten Schenkels mit den freien Rändern, welche die Montageöffnung in der Montageschiene begrenzen, bis der Niederhalteabschnitt flächig an dem Solarpaneel anliegt. Die Angriffspunkte in der C-förmigen Montageschiene kommen unter dem Solarpaneel zu liegen, so dass auf das Solarpaneel beim Verspannen der Befestigungsvorrichtung ein Biegemoment in Richtung des Paneels wirkt, wodurch ein Abrutschen des Niederhalteelementes vom Solarpaneelrand verhindert ist. Die seitlich abragenden Vorsprünge an dem zweiten Schenkel des Hintergreifteils können bei Abdrehen mit der Aussenseite der Montageschiene in Anlage kommen und bilden einen Anschlag für die Befestigungsvorrichtung. Des Weiteren kann die Befestigungsvorrichtung aufgrund der seitlich abragenden Vorsprünge an dem zweiten Schenkel des Hintergreifteils nicht in die Montageschiene hineinfallen oder beim seitlichen Einschieben nicht nach aussen wegkippen.

Vorzugsweise beträgt der Winkel des Verbindungsabschnitts des Niederhalteelementes zur Längsachse der Befestigungsvorrichtung 1° bis 10°, vorzugsweise 3° bis 7°. Mit diesem Winkelbereich lässt sich ein infolge des wirkenden Biegemomentes vorhandenes Spiel zwischen dem Schraubenkopf und der Durchführöffnung im ersten Abschnitt des Niederhalteelementes ausgleichen.

Bevorzugt beträgt der Winkel zwischen dem ersten Schenkel und dem zweiten Schenkel des Hintergreifteils 45° bis 135°. In einer besonders vorteilhaften Ausführungsform beträgt der Winkel zwischen dem ersten Schenkel und dem zweiten Schenkel des Hintergreifteils 90°, womit das Hintergreifteil eine im Wesentlichen L-förmige Ausgestaltung aufweist und leicht händelbar ist.

Vorzugsweise weist der erste Schenkel des Hintergreifteils nur in dem, von dem zweiten Schenkel abgewandten Endbereich eine Breite auf, die grösser als die Breite der Montageöffnung ist. Der übrige Bereich des ersten Schenkels weist somit eine Breite auf, die kleiner als die Breite der Montageöffnung der C-förmigen Montageschiene ist. Mit einem solch ausgebildeten Hintergreifteil kann die Befestigungsvorrichtung an einer beliebigen Stelle der Montageschiene senkrecht zu deren Längserstreckung in die Montageöffnung eingeführt und durch eine Drehung um die Längsachse der Befestigungsvorrichtung derart ausgerichtet werden, dass der Niederhalteabschnitt des Niederhalteelementes mit dem Solarpaneel in Anlage bringbar ist. Bei Montageschienen, die sich noch weit über den Rand des zu fixierenden Solarpaneels erstrecken, ergibt sich aufgrund dieser Ausgestaltung des Hintergreifteils eine wesentliche Reduktion des Montageaufwands, da die Befestigungsvorrichtung nicht vom freien Ende der Montageschiene bis zum Rand des Solarpaneels eingeschoben werden muss.

Bevorzugt ist eine Druckfeder zwischen dem Hintergreifteil und dem Niederhalteelement vorgesehen, durch welche die Befestigungsschraube hindurchgeführt ist. Damit wird der Montageabstand zwischen dem Niederhalteelement und dem Hintergreifteil in der Vormontagestellung der Befestigungsvorrichtung bis zum Verspannen derselben sichergestellt.

Vorzugsweise ist ein Hülsenabschnitt an der Durchführöffnung im ersten Abschnitt des Niederhalteelementes vorgesehen, der sich in Richtung des Hintergreifteils erstreckt. Der Hülsenabschnitt vergrössert die Anlagefläche des Niederhalteelementes mit der Befestigungsschraube und reduziert die Grösse eines allfällig vorhandenen Spiels zwischen dem Niederhalteelement und der Befestigungsschraube.

Sämtliche Teile der Befestigungsvorrichtung sind aufgrund deren Anwendung im Freien aus einem korrosionsbeständigen Material, wie Aluminium, rostfreier oder feuerverzinkter Stahl, Kunststoff oder dergleichen, gefertigt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Eine erfindungsgemässe Befestigungsvorrichtung in einer perspektivischen Ansicht;
- Fig. 2: eine Ansicht auf die gesetzte Befestigungsvorrichtung entlang der Linie II-II in Fig. 3a; und
- Fig. 3a, b: die erfindungsgemässe Befestigungsvorrichtung in zwei Montagezuständen in zwei separaten Schnittdarstellungen entlang der Linie III-III in Fig. 2.

Grundsätzlich sind in den Figuren gleiche Teile mit den gleichen Bezugszeichen versehen.

### Wege zur Ausführung der Erfindung

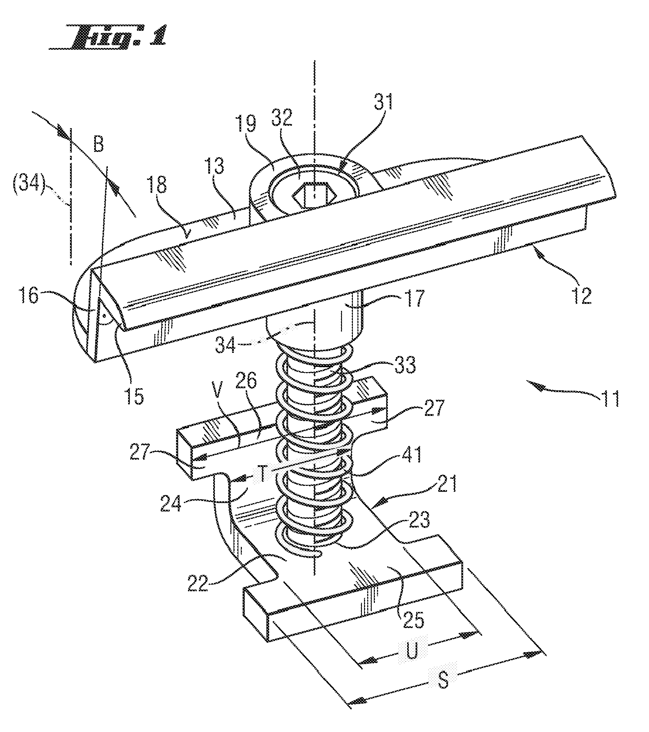

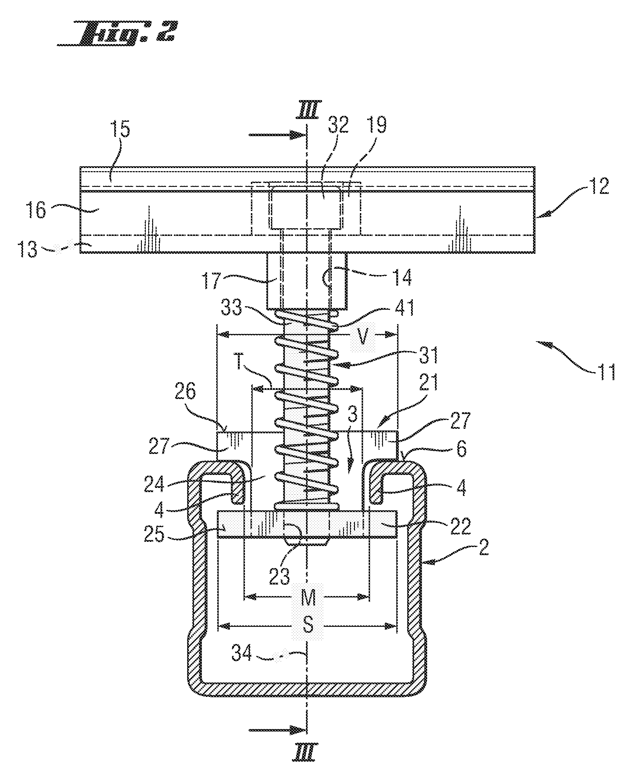

Wie in den Figuren 1 bis 3b dargestellt, umfasst die Befestigungsvorrichtung 11 für die Befestigung von Solarpaneelen 1 an einer C-förmigen Montageschiene 2, die eine von Rändern 4 begrenzte Montageöffnung 3 aufweist, ein Niederhalteelement 12, ein Hintergreifteil 21 und eine als Innensechskant-Schraube ausgebildete Befestigungsschraube 31, wobei zwischen dem Hintergreifteil 21 und dem Niederhalteelement 12 eine Druckfeder 41 vorgesehen ist.

Die Befestigungsschraube 31 weist einen Schraubenkopf 32 und einen davon abragenden Schraubenschaft 33 auf. Durch die Längserstreckung der Befestigungsschraube 31 verläuft eine Längsachse 34 der Befestigungsvorrichtung 11.

Das Niederhalteelement 12 weist einen ersten Abschnitt 13 mit einer Durchführöffnung 14 für die Befestigungsschraube 31, einen Niederhalteabschnitt 15 und einen den ersten Abschnitt 13 mit dem Niederhalteabschnitt 15 verbindenden Verbindungsabschnitt 16 auf. Der Niederhalteabschnitt 15 ist senkrecht zu dem Verbindungsabschnitt 16 angeordnet. An dem ersten Abschnitt 13 ist an der Durchführöffnung 14 ein Hülsenabschnitt 17 vorgesehen, der sich in Richtung des Hintergreifteils 21 erstreckt. Weiter ist an dem ersten Abschnitt 13 auf der gegenüberliegenden Seite 18 an der Durchführöffnung 14 eine Aufnahme19 für den Schraubenkopf 32 der Befestigungsschraube 31 vorgesehen. Der Verbindungsabschnitt 16 des Niederhalteelementes 12 ist bei diesem Ausführungsbeispiel in einem Winkel (B) von 5° zu der Längsachse 34 der Befestigungsvorrichtung 11 angeordnet.

Das Hintergreifteil 21 weist einen ersten Schenkel 22 mit einem Innengewinde 23 für die Befestigungsschraube 31 und einen, in einem Winkel A von 90° zu dem ersten Schenkel 22 ausgerichteten zweiten Schenkel 24 auf. Der erste Schenkel 22 weist bereichsweise eine Breite S auf, die grösser als die Breite M der Montageöffnung 3 der Montageschiene 2 ist, wobei der erste Schenkel 22 nur in dem, von dem zweiten Schenkel 24 abgewandten Endbereich 25 die Breite S aufweist. Im übrigen Bereich des ersten Schenkels 22 weist dieser eine Breite U auf, die höchstens der Breite M der Montageöffnung 3 entspricht. Der zweite Schenkel 24 weist eine Breite T auf, die höchstens der Breite M der Montageöffnung 3 entspricht. An dem, dem ersten Schenkel 22 abgewandten Endbereich 26 des zweiten Schenkels 24 sind beidseitig seitlich abragende Vorsprünge 27 vorgesehen. Der Abstand V von einem Vorsprung 27 zum anderen Vorsprung 27 ist grösser als die Breite M der Montageöffnung 3.

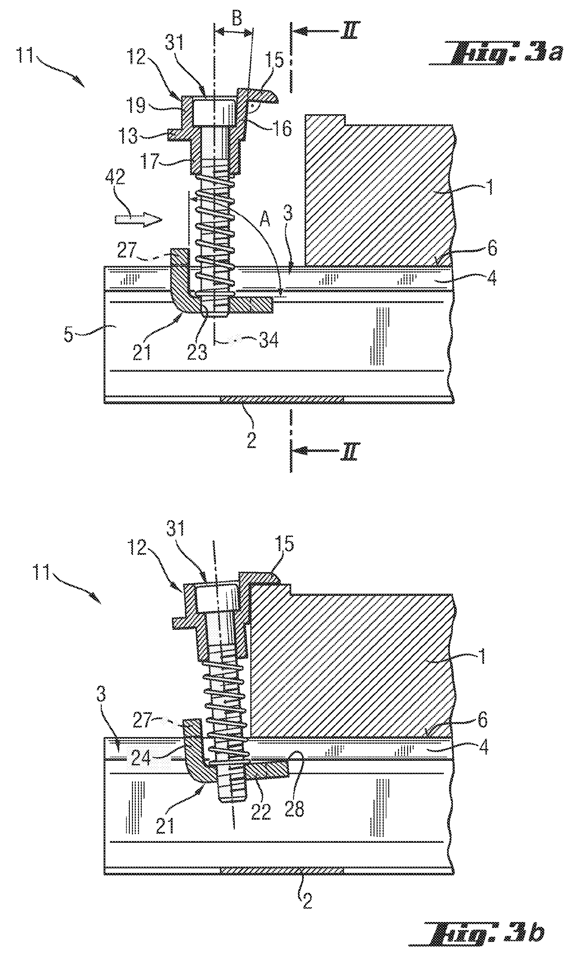

Anhand der Fig. 3a und 3b wird nachfolgend ein Montagevorgang der erfindungsgemässen Befestigungsvorrichtung 11 beschrieben. Die Befestigungsvorrichtung 11 wird beispielsweise von einem offenen Ende 5 der Montageschiene 2 in Richtung des Pfeils 42 eingeschoben (Fig. 3a), bis das Niederhalteelement 12 mit dem Solarpaneel 1 in Anlage kommt. Dabei liegen die Vorsprünge 27 an der Aussenseite 6 der Montageschiene 2 auf und verhindern, dass das Hintergreifteil 21 in die Montageschiene 2 hineinfallen kann.

Alternativ kann die Befestigungsvorrichtung 11 gegenüber der Darstellung in Fig. 3a um 90° verdreht mit dem ersten Schenkel 22 des Hintergreifteils 21 in die Montageöffnung 3 eingeführt und durch eine Drehung um die Längsachse 34 der Befestigungsvorrichtung 11 in die Lage gebracht werden, wie sie in der Fig. 3a dargestellt ist. Somit entfällt bei der erfindungsgemässen Befestigungsvorrichtung 11 das Erfordernis, diese jeweils von einem offenen Ende 5 der Montageschiene 2 her einschieben zu müssen.

Wenn die Befestigungsvorrichtung 11 entsprechend zu dem Solarpaneel 1 ausgerichtet ist (Fig. 3b), wird über die Befestigungsschraube 31 die Befestigungsvorrichtung 11 mit der Montageschiene 2 verspannt, wobei sich das Hintergreifteil 21 um den Angriffspunkt 28 in der Montageschiene 2 verdreht, wodurch auf die Befestigungsvorrichtung 11 ein Biegemoment in Richtung des Solarpaneels 1 wirkt, das ein Abrutschen des Niederhalteabschnitts 15 von dem Solarpaneel 1 verhindert. Die seitlichen Vorsprünge 27 an dem zweiten Schenkel 24 dienen als Anschlag beim Verdrehen des Hintergreifteils 21.

## Patentansprüche

1. Befestigungsvorrichtung für die Befestigung von Solarpaneelen (1) an einer C-förmigen Montageschiene (2), die eine von Rändern (4) begrenzte Montageöffnung (3) aufweist, mit einem Niederhalteelement (12), das einen ersten Abschnitt (13) mit einer Durchführöffnung (14), einen Niederhalteabschnitt (15) zum Niederhalten der Solarpaneele (1) sowie einen den ersten Abschnitt (13) und den Niederhalteabschnitt (15) verbindenden Verbindungsabschnitt (16) aufweist, wobei der Niederhalteabschnitt (15) senkrecht zu dem Verbindungsabschnitt (16) angeordnet ist, mit einem ein Innengewinde (23) aufweisendes Hintergreifteil (21) zum Einführen in die Montageöffnung (3) und zum Hintergreifen der freien Ränder (4) der Montageöffnung (3) der Montageschiene (2), und mit einer Befestigungsschraube (31) mit einem Schraubenkopf (32) und einem davon abragenden Schraubenschaft (33), welche die Durchführöffnung (14) im ersten Abschnitt (13) des Niederhalteelementes (12) durchdringt und zum Verspannen der Befestigungsvorrichtung (11) an der Montageschiene (2) in das Innengewinde (23) im Hintergreifteil (21) eingreift sowie durch deren Längserstreckung eine Längsachse (34) der Befestigungsvorrichtung (11) verläuft, **dadurch gekennzeichnet, dass** das Hintergreifteil (21) einen ersten Schenkel (22) mit dem Innengewinde (23) und einen, in einem Winkel (A) zu dem ersten Schenkel (22) ausgerichteten zweiten Schenkel (24) aufweist, wobei der erste Schenkel (22) zumindest bereichsweise eine Breite (S) aufweist, die grösser als die Breite (M) der Montageöffnung (3) der Montageschiene (2) ist, und wobei die Breite (T) des zweiten Schenkels (24) höchstens der Breite (M) der Montageöffnung (3) entspricht und an dem, von dem ersten Schenkel (22) abgewandten freien Endbereich (26) des zweiten Schenkels (24) beidseitig seitlich abragende Vorsprünge (27) vorgesehen sind, wobei der Abstand (V) von einem Vorsprung (27) zum anderen Vorsprung (27) grösser als die Breite (M) der Montageöffnung (3) ist, und wobei der Verbindungsabschnitt (16) des Niederhalteelementes (12) in einem Winkel (B) zu der Längsachse (34) der Befestigungsvorrichtung (11) angeordnet ist.

2. Befestigungsvorrichtung nach Anspruch 1, **dadurch gekennzeichnet, dass** der Winkel (B) des Verbindungsabschnitts (16) des Niederhalteelementes (12) zur Längsachse (34) der Befestigungsvorrichtung (11) 1° bis 10°, vorzugsweise 3° bis 7° beträgt.

3. Befestigungsvorrichtung nach Anspruch 1 oder 2, **dadurch gekennzeichnet, dass** der Winkel (A) zwischen dem ersten Schenkel (22) und dem zweiten Schenkel (24) des Hintergreifteils (21) 45° bis 135° beträgt.

4. Befestigungsvorrichtung nach einem der Ansprüche 1 bis 3, **dadurch gekennzeichnet, dass** der erste Schenkel (22) des Hintergreifteils (21) nur in dem, von dem zweiten Schenkel (24) abgewandten Endbereich (25) eine Breite (S) aufweist, die grösser als die Breite (M) der Montageöffnung (3) ist.

5. Befestigungsvorrichtung nach einem der Ansprüche 1 bis 4, **dadurch gekennzeichnet, dass** eine Druckfeder (41) zwischen dem Hintergreifteil (21) und dem Niederhalteelement (12) vorgesehen ist, durch welche die Befestigungsschraube (31) hindurchgeführt ist.

6. Befestigungsvorrichtung nach einem der Ansprüche 1 bis 5, **dadurch gekennzeichnet, dass** ein Hülsenabschnitt (17) an der Durchführöffnung (14) im ersten Abschnitt (13) des Niederhalteelementes (12) vorgesehen ist, der sich in Richtung des Hintergreifteils (21) erstreckt.
